# DEMANDE DE BREVET EUROPEEN

(11) **EP 1 923 208 A1**
(43) Date de publication de la demande: **21.05.2008**
(21) Numéro de dépôt: 07120828.4
(22) Date de dépôt: 16.11.2007
(51) Int. Cl.: B30B 15/06, B30B 15/34, F16C 11/06, B21D 5/16, B21D 5/02

(54) **Liaison mécanique pour transfert de forces tout en assurant une isolation**

(30) Priorité: 20.11.2006 FR 0654984
(71) Demandeur: AMADA EUROPE, 95912 Roissy CDG Cedex (FR)
(72) Inventeur: Hansen, Bjarne D., 72510 Pontvallain- France (FR)
(74) Mandataire: Dronne, Guy

(57) **Abrégé**

L'invention concerne un dispositif de liaison entre un organe mobile (14) et l'extrémité mobile (24b) d'un dispositif moteur. Il comprend :
- un élément de liaison mécanique (34) en contact avec ledit organe mobile, et
- un élément d'isolation thermique (32) interposé entre ledit élément de liaison mécanique et ladite extrémité du dispositif moteur, par quoi la chaleur produite par ledit dispositif moteur n'est sensiblement pas transmis audit organe mobile.

Application à la réalisation de presses plieuses.

## Description

La présente invention a pour objet un dispositif de liaison mécanique entre un organe mobile et l'extrémité mobile d'un dispositif moteur, et plus particulièrement un tel dispositif de liaison mécanique qui permet d'éviter sensiblement la transmission de l'échauffement du dispositif moteur à l'organe mobile tout en autorisant la transmission de forces importantes. L'invention concerne également un système moteur utilisant un tel dispositif de liaison mécanique et une presse plieuse pour plier des tôles comprenant un tel système moteur.

II est bien connu que lorsque deux pièces présentant des coefficients de dilatation thermique relativement élevés sont en contact intime et si un des éléments en contact est à une température supérieure à la température ambiante, il y aura une propagation de la chaleur vers l'autre pièce entraînant ainsi une dilatation thermique de cette autre pièce.

Dans le cas où la pièce est de grandes dimensions comparée aux surfaces de contact qui constituent les points d'échauffement, la température en chaque point de la pièce varie et se distribue selon des isothermes dans la matière constituant la pièce autour du ou des points d'échauffement. Cette situation peut être instable dans le temps si la transmission énergétique à travers la ou les surfaces de contact n'est pas constante, que la température ambiante n'est pas constante et que la chaleur dissipée à travers l'ensemble des surfaces de contact est inférieure numériquement à celle transmise par le ou les surfaces d'échauffement.

Dans ce cas où la dilatation thermique libre n'est pas possible, des tensions thermiques de compression et des déformations résultantes, présentes localement sur le lieu d'échauffement local, peuvent être calculées.

Dans les deux cas qu'il s'agisse d'une dilatation thermique libre ou de tensions internes thermiques, le résultat est une déformation mécanique de la pièce.

Les tensions thermiques peuvent globalement, par la forme de la pièce et les emplacements des points d'échauffement, engendrer des déformations maximales nettement plus importantes que si la pièce était échauffée uniformément. Cette situation est créée par le fait que des surfaces d'échauffement locales même très limitées créent des tensions thermiques et des déformations locales fortes qui vont déformer des zones éloignées des surfaces d'échauffement par un système de "bras de levier", même si ces zones ne subissent elles-mêmes qu'un échauffement limité. C'est précisément la différence de températures des différentes parties d'une pièce qui rend impossible la dilatation thermique libre sans création de tension thermique interne.

Les inventeurs ont mis en évidence que cette situation se rencontre notamment mais non exclusivement dans la réalisation de la commande de déplacement d'organes mécaniques dans des machines-outils et en particulier dans la commande de presses plieuses pour plier des tôles.

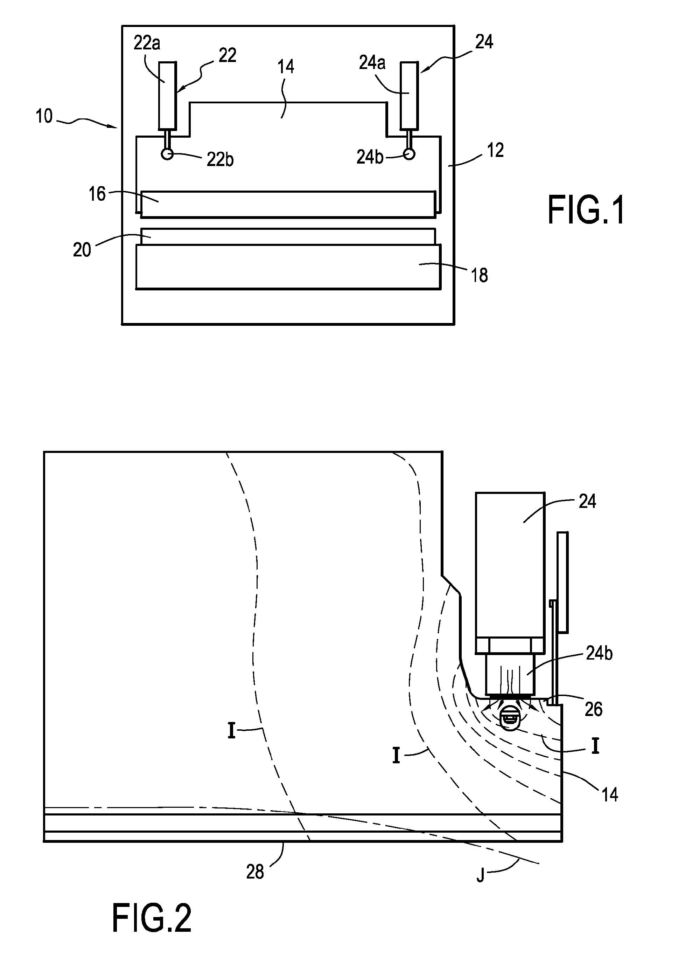

Sur la figure 1, on a représenté schématiquement une presse plieuse 10 avec son bâti 12, son tablier supérieur 14 mobile qui porte des organes de fixation 16 d'outils de pliage et un tablier inférieur 18 qui porte des organes de fixation de Vés de pliage 20. De façon classique, le déplacement en translation du tablier supérieur 14 est commandé par deux vérins hydrauliques 22 et 24 dont les corps 22a, 24a sont solidaires du bâti 12 et dont l'extrémité des pistons 22b, 24b est solidaire des extrémités supérieures du tablier mobile 14. Les dimensions du tablier supérieur sont de l'ordre de :
- longueur : 1200 à 6000 mm ;
- hauteur : 1000 à 3000 mm ;
- épaisseur : 40 à 120 mm.

Les essais réalisés par les inventeurs ont montré que les vérins hydrauliques 22 et 24, comme la plupart des autres générateurs de force tels que des vérins électromécaniques à vis et à billes, ont une température de fonctionnement continue qui dépasse de quelques degrés ou de quelques dizaines de degrés Celsius la température ambiante. Cet échauffement est produit par différentes sources de friction interne entre pièces en mouvement et pièces statiques, par l'hystérésis du matériau mis en charge alternative par le passage dans le vérin d'huile hydraulique chaude et chauffant en permanence le piston. L'huile hydraulique circulant dans le vérin peut atteindre 70°C alors que le piston atteint environ 60°C. La face proche de la surface d'action 26 des pistons 22b et 24b des vérins sur le tablier supérieur 14 est à environ 40°C pour une température ambiante de 17°C et les parties centrales du tablier supérieur sont à environ 20°C. Comme le montre mieux la figure 2, ces températures à partir de la surface de contact 26 entre le vérin 24 et le tablier supérieur 14 se répartissent selon des isothermes I. Dans le cas d'une presse plieuse, seule la déformation repérée par la ligne J du bord inférieur 28 du tablier supérieur est significative. Pour la performance de la presse plieuse, c'est cette déformation qui est significative et elle résulte de la superposition des deux phénomènes décrits ci-dessous :
- d'une part, la dilatation thermique linéaire est libre et sans contrainte thermique selon la direction verticale. Un échauffement moyen de 10°C de cette zone de 400 mm de hauteur donne selon une formule bien connue une dilatation linéaire théorique de 48 µm correspondant à ce que l'on peut mesurer sur une machine réelle ;
- d'autre part, la déformation de la partie centrale du tablier supérieur est produite par les tensions thermiques liées à l'échauffement de la matière en dessous et à côté des points d'action des vérins.

Dans les presses plieuses actuelles, la position des vérins de commande peut être définie avec une précision de 1 ou 2 µm. La déformation du bord inférieur 28 du tablier supérieur 14 qui peut atteindre 48 µm est donc inacceptable.

Un premier objet de la présente invention est de fournir un dispositif de liaison mécanique entre un organe mobile et l'extrémité mobile d'un dispositif moteur susceptible de s'échauffer qui permet de supprimer ou de réduire très considérablement la transmission de chaleur à l'organe mobile tout en permettant la transmission d'une force importante entre le dispositif moteur et l'organe mobile.

Pour atteindre ce but selon l'invention, le dispositif de liaison entre un organe mobile et un dispositif moteur susceptible de provoquer un échauffement, ledit dispositif moteur ayant une extrémité mobile et étant apte à déplacer ledit organe mobile, se caractérise en ce qu'il comprend :
un élément de liaison mécanique en contact avec ledit organe mobile, et
un élément d'isolation thermique interposé entre ledit élément de liaison mécanique et ladite extrémité du dispositif moteur, par quoi la chaleur produite par ledit dispositif moteur n'est sensiblement pas transmis audit organe mobile.

On comprend que l'interposition dans le dispositif de liaison de l'élément d'isolation thermique entre l'extrémité mobile du dispositif moteur et l'organe mobile permet de réduire très considérablement le flux thermique s'écoulant entre le dispositif moteur et l'organe mobile, permettant ainsi de réduire très considérablement les phénomènes de dilatation thermique dans l'organe mobile.

De préférence, le dispositif de liaison est caractérisé en ce qu'il comprend en outre un élément de solidarisation de l'extrémité mobile du dispositif moteur et de l'organe mobile et un deuxième élément d'isolation thermique interposé entre ledit élément de solidarisation et ledit organe mobile.

On comprend que, grâce à cette disposition, on assure une solidarisation effective bidirectionnelle entre l'extrémité du dispositif moteur et l'organe mobile tout en conservant une très bonne isolation thermique entre le dispositif moteur "chaud" et l'organe mobile.

De préférence, le ou les éléments d'isolation thermique sont réalisés en un composite synthétique qui, de préférence, a une limite de contrainte élastique statique au moins égale à 50 MPa et un coefficient de conductibilité thermique inférieur à 0,5 W/mK.

Un deuxième objet de l'invention est de fournir un système moteur utilisant un tel dispositif de liaison mécanique évitant la transmission des flux thermiques pour la réalisation de la commande du déplacement du tablier mobile d'une presse plieuse pour plier des tôles.

Le système moteur utilisant un dispositif de liaison du type défini ci-dessus se caractérise en ce que ladite extrémité mobile dudit dispositif moteur est l'extrémité d'un piston de vérin agissant sur une surface dudit organe mobile, en ce que ledit élément de liaison est une plaque appliquée contre ladite surface et en ce que l'élément d'isolation thermique comporte une première face rotulante apte à coopérer avec une deuxième face rotulante ménagée à l'extrémité dudit piston.

Un troisième objet de l'invention est de fournir une presse plieuse utilisant deux systèmes moteurs du type mentionné ci-dessus.

D'autres caractéristiques et avantages de l'invention apparaîtront mieux à la lecture de la description qui suit d'un mode de réalisation de l'invention donné à titre d'exemple non limitatif. La description se réfère aux figures annexées, sur lesquelles :
la figure 1, déjà décrite, montre en élévation une presse plieuse ;
la figure 2, déjà décrite, montre une moitié du tablier supérieur d'une presse plieuse avec les représentations des isothermes dans le tablier supérieur ;
la figure 3 montre un mode de réalisation de la liaison mécanique entre le piston d'un vérin de commande et le tablier supérieur mobile d'une presse plieuse ; et
la figure 4 est une vue en perspective partiellement coupée d'un élément d'isolation thermique.

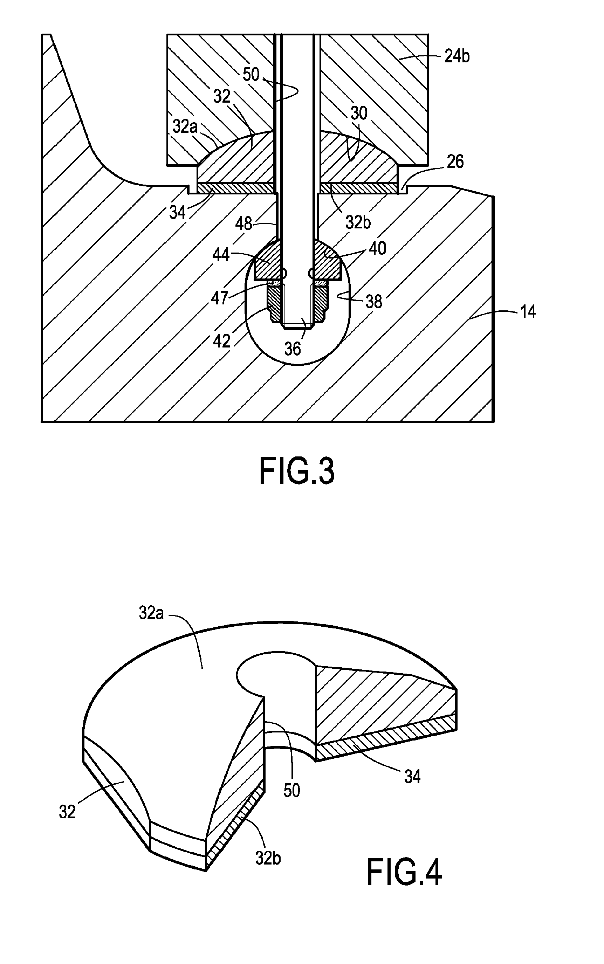

En se référant maintenant aux figures 3 et 4, on va décrire un mode préféré de réalisation de la liaison mécanique entre l'extrémité du piston d'un vérin hydraulique et le tablier supérieur d'une presse plieuse du type décrit précédemment. Il va de soi que cette description ne constitue qu'un exemple d'utilisation du dispositif de liaison mécanique selon l'invention et que de nombreuses autres applications pourraient être envisagées.

Sur la figure 3, on retrouve une partie du tablier supérieur 14 de la presse plieuse des figures 1 et 2 et le piston 24b du vérin 24 ainsi que la face 26 du tablier supérieur sur laquelle le piston du vérin doit appliquer la force. Dans ce mode de réalisation, l'extrémité du piston 24b présente partiellement la forme d'une calotte sphérique concave 30 constituant une surface rotulante. Entre l'extrémité du piston du vérin 24b et la surface 26, sont interposés d'une part un élément isolant 32 et d'autre part un élément métallique 34. L'élément isolant 32 présente une face supérieure 32a qui a la forme d'une calotte sphérique convexe et qui coopère avec l'extrémité en forme de calotte sphérique concave 30 du piston du vérin et une deuxième face 32b sensiblement plane appliquée sur l'élément métallique 34. On comprend qu'ainsi, il n'existe aucun pont thermique entre le piston 24b du vérin et le tablier supérieur 14, si ce n'est par l'élément isolant 32 dont la résistivité thermique est très élevée.

L'élément métallique 34 est seulement préférentielle et elle sert à répartir la force de pliage sur l'élément isolant rotulant 32.

Pour assurer une liaison mécanique bidirectionnelle entre le piston du vérin 24a et le tablier 14, de préférence, le système de liaison mécanique est complété par les éléments suivants. Une tige métallique 36 s'étend selon l'axe du piston du vérin 24b et dépasse de l'extrémité inférieure de celui-ci. Dans la masse du tablier 14 est ménagé un évidement selon une direction perpendiculaire à la face frontale du tablier et qui est référencé 38. Cet évidement 38 comporte une portion de paroi supérieure 40 de forme semi-cylindrique. La liaison mécanique est complétée par un écrou 42 qui coopère avec l'extrémité filetée de la tige 36, par un élément d'isolation thermique 44 en forme de demi-lune et une rondelle élastiquement déformable 47. Par ailleurs, il faut ajouter que le diamètre du passage 48 réalisé dans le tablier pour permettre l'insertion de la tige 36 est supérieur au diamètre externe de cette tige de manière à éviter tout contact entre cette tige et le tablier. En outre, l'ouverture circulaire 50 réalisée dans l'élément isolant 32 et la rondelle 47 est suffisant pour qu'il n'y ait aucun contact entre la tige 36 et l'élément 34.

On comprend qu'ainsi la source de chaleur constituée par le piston du vérin 24b et sa tige 36 est totalement isolée thermiquement du tablier 14 par la présence des éléments d'isolation thermique 32 et 44. Néanmoins, ce mode de liaison permet la transmission de force importante entre le piston du vérin et le tablier 14.

De préférence, les éléments d'isolation thermique 32 et 44 sont constitués à l'aide d'un composite de synthèse qui peut être réalisé à partir d'une toile de coton imbibée en époxy et séchée ultérieurement. Il existe également certaines céramiques pouvant convenir pour la réalisation des éléments d'isolation thermique. Ces éléments d'isolation thermique présentent un coefficient de conductibilité thermique très faible typiquement de l'ordre de 0,29 W/mK et de toute manière inférieur à 0,5 W/mK. En outre, ce matériau d'isolation thermique présente une limite de contrainte élastique statique très élevée supérieure à 50 MPa et de préférence de l'ordre de 100 MPa.

Des mesures effectuées sur une presse plieuse, dans laquelle la liaison entre les pistons des vérins et le tablier supérieur est réalisée conformément à l'invention, ont montré que l'échauffement moyen sous l'extrémité du piston du vérin est d'environ 1°C et que la dilatation thermique est inférieure à 5 µm pour ce qui concerne le bord inférieur 28 du tablier supérieur 14 de la presse plieuse.

## Revendications

1. Dispositif de liaison entre un organe mobile et un dispositif moteur susceptible de provoquer un échauffement, ledit dispositif moteur ayant une extrémité mobile et étant apte à déplacer ledit organe mobile, **caractérisé en ce qu'**il comprend :
un élément de liaison mécanique en contact avec ledit organe mobile, et
un élément d'isolation thermique interposé entre ledit élément de liaison mécanique et ladite extrémité du dispositif moteur, par quoi la chaleur produite par ledit dispositif moteur n'est sensiblement pas transmis audit organe mobile.

2. Dispositif de liaison selon la revendication 1, **caractérisé en ce qu'**il comprend en outre un élément de solidarisation de l'extrémité mobile du dispositif moteur et de l'organe mobile et un deuxième élément d'isolation thermique interposé entre ledit élément de solidarisation et ledit organe mobile.

3. Dispositif de liaison selon l'une quelconque des revendications 1 et 2, **caractérisé en ce que** le ou les éléments d'isolation thermique sont réalisés en un composite synthétique.

4. Dispositif de liaison selon la revendication 3, **caractérisé en ce que** le matériau isolant thermique a une limite de contrainte élastique statique au moins égale à 50 MPa et un coefficient de conductibilité thermique inférieur à 0,5 W/mK.

5. Système moteur utilisant un dispositif de liaison selon l'une quelconque des revendications 1 à 4, **caractérisé en ce que** ladite extrémité mobile dudit dispositif moteur est l'extrémité d'un piston de vérin agissant sur une surface dudit organe mobile, **en ce que** ledit élément de liaison est une plaque appliquée contre ladite surface et **en ce que** l'élément d'isolation thermique comporte une première face rotulante apte à coopérer avec une deuxième face rotulante ménagée à l'extrémité dudit piston.

6. Système moteur selon les revendications 2 et 5, **caractérisé en ce que** ledit élément de solidarisation comprend une tige solidaire de l'extrémité dudit piston, un organe de serrage coopérant avec ladite tige, et **en ce que** ledit deuxième élément d'isolation thermique est interposé entre une deuxième surface dudit organe mobile et ledit élément de serrage, ladite tige n'ayant aucun contact avec ledit organe mobile ou ledit élément de liaison.

7. Système moteur selon la revendication 6, **caractérisé en ce que** ladite deuxième surface est une surface rotulante et la face du deuxième élément d'isolation thermique appliquée contre ladite deuxième surface est une face rotulante conjuguée.

8. Presse plieuse comprenant un bâti, un tablier mobile et deux systèmes moteurs solidaires du bâti, **caractérisée en ce que** chaque dispositif moteur est conforme à l'une quelconque des revendications 5 à 7 et **en ce que** l'extrémité du piston de chaque vérin est reliée à une extrémité dudit tablier mobile qui constitue l'organe mobile.
